# FASCICULE DE BREVET EUROPEEN

(11) **EP 2 134 095 B1**
(45) Date de publication et mention de la délivrance du brevet: **31.08.2016**
(21) Numéro de dépôt: 09162441.1
(22) Date de dépôt: 10.06.2009
(51) Int. Cl.: H04L 12/18, H04N 21/2343, H04N 21/61, H04N 21/647, H04W 76/00

(54) **Procédé de transmission de contenus en couches par des ensembles choisis de stations de base d'une infrastructure radio**
Übertragungsverfahren von Inhalten in Schichten durch ausgewählte Einheiten von Basisstationen einer Funkinfrastruktur
Method for transmitting content in layers by chosen units of base stations of a radio infrastructure

(30) Priorité: 11.06.2008 FR 0853875
(43) Date de publication de la demande: 16.12.2009
(73) Titulaire: ALCATEL LUCENT, 92100 Boulogne-Billancourt (FR)
(72) Inventeur: Alberi Morel, Marie Line, 91620 Nozay (FR); Sayadi, Bessem, 91620 Nozay (FR)
(74) Mandataire: Berthier, Karine

(56) Documents cités:
- US-A1- 2003 135 863
- US-A1- 2006 023 748
- US-A1- 2006 256 851
- US-A1- 2007 056 000
- OSTERBERG P ET AL: "Receiver-controlled joint source/channel coding on the application level, for video streaming over WLANs" VTC 2003-SPRING. THE 57TH. IEEE SEMIANNUAL VEHICULAR TECHNOLOGY CONFERENCE. PROCEEDINGS. JEJU, KOREA, APRIL 22 - 25, 2003; [IEEE VEHICULAR TECHNOLGY CONFERENCE], NEW YORK, NY : IEEE, US, vol. 3, 22 avril 2003 (2003-04-22), pages 1558-1561, XP010862422 ISBN: 978-0-7803-7757-8
- Qian Zhang ET AL: "Sender-adaptive and receiver-driven layered multicast for scalable video over the Internet", IEEE Transactions on Circuits and Systems for Video Technology, vol. 15, no. 4, 1 April 2005 (2005-04-01), pages 482-495, XP055012429, ISSN: 1051-8215, DOI: 10.1109/TCSVT.2005.844454

## Description

L'invention concerne la transmission de contenus dits « en couches », éventuellement multiplexés, par des infrastructures de transmission par voie d'ondes.

On entend ici par « contenu en couches » un ensemble de données agencé en une couche dite de base (ou « base layer ») et une ou plusieurs couches dites d'augmentation (ou « enhancement layer »), complémentaires de la couche de base. La couche de base comprend l'ensemble des données d'un contenu (éventuellement multimédia) qui va permettre à un terminal de communication de reproduire ce contenu avec une qualité (ou définition ou résolution) donnée. Chaque couche d'augmentation comprend un autre ensemble de données dudit contenu permettant audit terminal de communication de compléter l'ensemble de données de la couche de base afin de reproduire le contenu avec une qualité (ou définition ou résolution) améliorée par rapport à celle obtenue avec la seule couche de base et les autres couches d'augmentation. On comprendra que la nième couche d'augmentation d'un contenu ne peut être utilisée qu'à condition que la couche de base ait été reçue. Un contenu en couches pourra par exemple être un programme de télévision ou de radio, un fichier audio ou une vidéo. Il pourra par exemple s'agir de contenus multimédia de type SVC (« Scalable Video Coding ») générés par des encodeurs de type H264 SVC.

Le document US2003/0135863 A1 décrit un procédé d'encodage en couches de données video et un procédé de transmission des données encodées entre un serveur et des clients interconnectés sur le réseau Internet.

Le document intitulé « Receiver-Controlled Joint Source/Channel Coding on the Application Level, for Video Streaming Over WLANs » de P. Oserberg, D. Forsgren et T Zhang, VTC 2003-SPRING, the 57th IEEE semiannual vehicular technology conference proceedings, Jeju, Korea, April 22-25 2003, propose une méthode de transmission de données video et audio encodées par couche sur un réseau de transmission sans fil de type WLAN.

Par ailleurs, on entend ici par « infrastructure de transmission par voie d'ondes », toute infrastructure de communication dans laquelle la transmission de contenus se fait par voie d'ondes de façon monodirectionnelle en mode « broadcast » (diffusion/point-à-point) ou en mode « multicast » (point-à-multipoints). Il est rappelé que dans le mode multicast le réseau peut transmettre de façon sélective les données aux cellules qui contiennent les membres d'un groupe multicast (dans ce cas des messages de contrôle sont envoyés sur la voie montante (ou « uplink »)). Par conséquent, il pourra s'agir aussi bien d'un réseau de communication radio que d'un réseau de diffusion par voie d'ondes. A titre d'exemples non limitatifs, il pourra donc s'agir d'un réseau de diffusion sans fil (comme par exemple un réseau terrestre de type DVB-H (pour « Digital Video Broadcasting - Handhelds » - télévision mobile), ou un réseau hybride (c'est-à-dire à la fois satellitaire et terrestre (comme par exemple un réseau de type DVB-SH (ou DVB-SSP) - liaisons satellitaires avec relais terrestres))), ou bien d'un réseau cellulaire ou mobile (comme par exemple un réseau de type GSM/EDGE ou UMTS) ou bien encore d'un réseau métropolitain ou MAN (pour « Metropolitan Area Network » - comme par exemple un réseau de type WiMAX).

Il est rappelé que la transmission de contenus en mode diffusion ou en mode multicast (point-à-multipoints) se fait par le biais de services dédiés dans les réseaux, comme par exemple le service appelé (e-)MBMS (« (enhanced) Multimedia Broadcast Multicast Service ») dans le cas des réseaux 3G (UMTS), qui peuvent être multiplexés temporellement (plusieurs utilisateurs peuvent avoir accès en même temps à un même service dans le cas d'un multiplexage de type TDM).
Enfin, on entend ici par « terminal de communication » tout équipement de communication non filaire (ou radio ou mobile ou portable ou encore cellulaire) capable de recevoir des contenus en couches d'une infrastructure de transmission par voie d'ondes du type précité. Par conséquent, il pourra par exemple s'agir d'un téléphone mobile (ou cellulaire), d'un ordinateur portable, d'un assistant personnel numérique (ou PDA), d'un récepteur de contenus en couches (par exemple un décodeur, une passerelle résidentielle (ou « residential gateway ») ou un STB (« Set-Top Box »)), dès lors qu'il est équipé de moyens de communication, radio (ou satellitaires), aptes à la réception de contenus en couches. Comme le sait l'homme de l'art, la transmission par voie d'ondes de contenus en couches en mode broadcast ou multicast est rendue difficile par la coexistence de terminaux de communication hétérogènes (c'est-à-dire de capacités de traitement différentes) et d'infrastructures de transmission par voie d'ondes comprenant des réseaux d'accès radio hétérogènes (c'est-à-dire de capacités différentes, notamment en matière d'efficacité d'adaptation de débit de transmission (ou « bit rate »)), et par le fait que les disponibilités des ressources radio varient dans le temps et que les conditions de transmission varient temporellement et/ou géographiquement.

Dans le cas d'une diffusion en mode multicast dans une zone géographique choisie subdivisée en cellules (par exemple), les contenus ne sont diffusés que dans les cellules de cette zone où sont situés les usagers qui les ont requis. Dans le cas d'une diffusion en mode broadcast dans une zone géographique choisie subdivisée en cellules (par exemple), les contenus sont diffusés dans toutes les cellules de cette zone indépendamment des endroits ou sont situés les usagers.

Par ailleurs, dans le cas d'une couche de transport de type RTP/IP, soit (A) on associe généralement une adresse IP broadcast/multicast à chaque couche de chaque contenu d'un service de diffusion (broadcast/multicast), soit (B) on associe une adresse IP broadcast/multicast à chaque contenu (c'est-à-dire pour toutes les couches) d'un service de diffusion (broadcast/multicast). Par conséquent, dans le cas (A) et en présence d'un service de type MBMS concernant une zone géographique donnée, seules certaines cellules de cette zone peuvent transmettre tout ou partie des couches de données d'augmentation d'un contenu, mais pas la couche de données de base de ce contenu, si bien que la disponibilité du service n'est pas garantie dans l'intégralité de cette zone. Dans le cas (B) et toujours en présence d'un service de type MBMS concernant une zone géographique donnée, certaines cellules de cette zone peuvent refuser de transmettre un contenu alors même qu'elles sont en mesure de transmettre la couche de données de base de ce contenu, laquelle est suffisante pour garantir la disponibilité du service correspondant dans l'intégralité de la zone.

L'invention a donc pour but d'améliorer la situation dans une infrastructure de transmission par voie d'ondes, aussi bien dans le cas d'une diffusion en mode broadcast que dans le cas d'une diffusion en mode multicast.

Elle propose à cet effet un procédé, dédié a la transmission, via une infrastructure de transmission par voie d'ondes, comportant un coeur de réseau couplé à un réseau d'accès radio comprenant des stations de base contrôlées par des noeuds, d'un contenu agencé en une couche de données de base et au moins une couche de données d'augmentation, et comprenant les étapes suivantes initiées par le coeur de réseau :
- envoyer à des noeuds, contrôlant des stations de base choisies constituant un premier ensemble, une première requête demandant l'établissement d'une session de transmission d'un premier flux relatif à un premier groupe de couche(s) du contenu,
- déterminer un second ensemble de stations de base parmi les stations de base du premier ensemble, et
- envoyer aux noeuds contrôlant les stations de base de ce second ensemble une seconde requête demandant l'établissement d'une session de transmission d'un second flux relatif à un second groupe de couche(s) du contenu, distinct du premier groupe.

Le procédé selon l'invention peut comporter d'autres caractéristiques qui peuvent être prises séparément ou en combinaison, et notamment :
- on peut choisir le premier groupe de couches du contenu de manière à ce qu'il contienne au moins la couche de données de base ;
- on peut déterminer le second ensemble de stations de base après avoir défini le premier ensemble de stations de base mais indépendamment du succès ou de l'échec de l'établissement de la session de transmission d'un premier flux par les stations de base du premier ensemble ;
   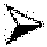 on peut par exemple déterminer le second ensemble de stations de base en fonction de rapports de mesure(s) relatifs aux stations de base du premier ensemble ;
- dans une première variante, on peut déterminer le second ensemble de stations de base avec certaines des stations de base du premier ensemble qui ont réussi à établir la session de transmission d'un premier flux ;
- on peut envoyer une première requête demandant l'établissement d'une session de transmission d'un premier flux relatif à un premier groupe de couche du contenu ne comprenant que la couche de base, et on peut envoyer une seconde requête demandant l'établissement d'une session de transmission d'un second flux relatif à un second groupe de couche(s) ne comprenant qu'une couche de données d'augmentation du contenu mais pas la couche de données de base de ce contenu ;
   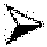 on peut envoyer autant de secondes requêtes qu'il y a de couches de données d'augmentation qui constituent le contenu. Chaque seconde requête demande alors l'établissement d'une session de transmission d'un second flux relatif à un second groupe de couche qui ne comprend que l'une des couches de données d'augmentation du contenu ;
      - en présence de couches de données d'augmentation associées à des niveaux hiérarchiques différents et ordonnés, on peut envoyer les secondes requêtes les unes après les autres en fonction des niveaux hiérarchiques qui sont associés aux couches de données d'augmentation auxquelles elles correspondent respectivement. Dans ce cas, la seconde requête qui correspond à la couche de données d'augmentation associée au niveau hiérarchique le plus élevé est envoyée en premier ;
   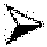 on peut identifier chaque couche du contenu avec une adresse de communication propre ;
- dans une deuxième variante, on peut déterminer le second ensemble de stations de base avec certaines des stations de base du premier ensemble qui ont refusé d'établir la session de transmission d'un premier flux ;
- dans une troisième variante, on peut déterminer le second ensemble de stations de base avec certaines des stations de base du premier ensemble qui n'ont pas réussi à établir la session de transmission d'un premier flux ;
- dans la deuxième et/ou la troisième variante(s) on peut envoyer une première requête demandant l'établissement d'une session de transmission d'un premier flux relatif à un premier groupe de couches comprenant toutes les couches du contenu, et on peut envoyer une seconde requête demandant rétablissement d'une session de transmission d'un second flux relatif à un second groupe de couche(s) constituant un sous-groupe du premier groupe de couches ;
   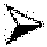 on peut utiliser une même adresse de communication pour identifier toutes les couches du contenu.

L'invention est particulièrement bien adaptée, bien que de façon non exclusive, aux réseaux de type DVB-H, DVB-SH (ou DVB-SSP), DVB-T, WiMAX, ainsi qu'à toutes leurs évolutions.

D'autres caractéristiques et avantages de l'invention apparaîtront à l'examen de la description détaillée ci-après, et des dessins annexés, sur lesquels :
- la figure 1 illustre de façon très schématique et fonctionnelle une infrastructure de transmission de type 3GPP MBMS permettant de mettre en oeuvre l'invention, et
- la figure 2 illustre de façon très schématique un exemple de subdivision d'une zone géographique en trois sous-zones géographiques.

Les dessins annexés pourront non seulement servir à compléter l'invention, mais aussi contribuer à sa définition, le cas échéant.

L'invention a pour objet de proposer un mode de transmission de contenus en couches, via une infrastructure de transmission par voie d'ondes, permettant d'améliorer la mise à disposition de terminaux de communication radio de services de diffusion de contenus en couches dans des zones géographiques.

Dans ce qui suit, on considère à titre d'exemple non limitatif que l'infrastructure de transmission par voie d'ondes (CN, RA) est un réseau de communication radio (ou cellulaire ou encore mobile) de type 3GPP MBMS, par exemple de type UMTS. Mais, l'invention n'est pas limitée à ce type d'infrastructure de transmission par voie d'ondes. Elle concerne en effet tout type d'infrastructure propre à assurer une transmission par voie d'ondes de contenus (éventuellement multimédia), monodirectionnelle, éventuellement multiplexés, qu'il s'agisse d'un réseau de diffusion monodirectionnelle (terrestre ou terrestre et satellitaire) ou d'un réseau large bande non filaire. Par conséquent, il pourra également s'agir d'un réseau cellulaire (ou mobile) de type GSM/EDGE, d'un réseau local sans fil), d'un réseau métropolitain ou MAN (comme par exemple un réseau de type WiMAX), d'un réseau terrestre (comme par exemple un réseau DVB-T), ou d'un réseau hybride (comme par exemple un réseau DVB-SH (ou DVB-SSP)).

Par ailleurs, on considère dans ce qui suit, à titre d'exemple non limitatif, que les terminaux de communication (TC) sont des téléphones mobiles (ou cellulaires) ou des assistants personnels numériques (ou PDAs). Mais, l'invention n'est pas limitée à ce type de terminal de communication radio. Elle concerne en effet tout équipement de communication mobile (ou portable ou encore cellulaire) capable de recevoir des contenus en couches par voie d'ondes via une infrastructure de transmission du type précité. Par conséquent, il pourra également s'agir d'un ordinateur portable, d'un récepteur de contenus multimédia en couches (par exemple un décodeur, une passerelle résidentielle (ou « residential gateway ») ou un STB (« Set-Top Box »)), dès lors qu'il est équipé de moyens de communication par voie d'ondes (radio ou satellitaires) aptes à la réception de contenus en couches.

En outre, on considère dans ce qui suit, à titre d'exemple non limitatif, que les contenus en couches, diffusés vers les terminaux (TC), sont des contenus multimédia tels que des vidéos. Mais, l'invention n'est pas limitée à ce type de contenu en couches. Elle concerne en effet tout type de contenu en couches, et notamment les programmes de télévision ou de radio et les contenus audio.

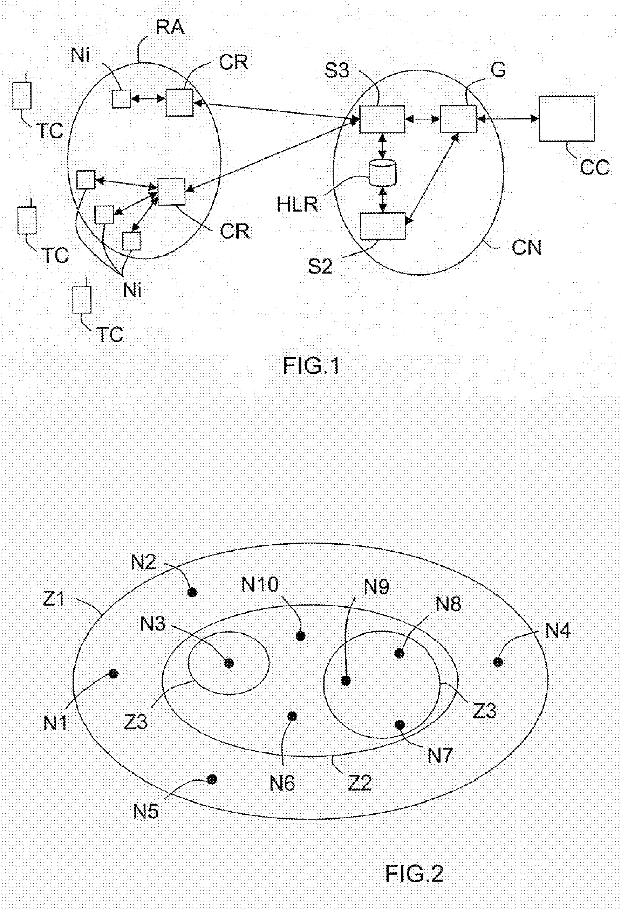

Comme cela est schématiquement illustré sur la figure 1, la mise en oeuvre de l'invention nécessite l'existence d'une infrastructure de transmission (par voie d'ondes) comprenant un coeur de réseau (ou « Core Network » en anglais) CN et un réseau d'accès radio RA, couplés l'un à l'autre.

Le réseau d'accès radio RA (ici de type UTRAN) comporte principalement des stations de base Ni (appelées Node Bs dans le cas d'un UTRAN) et des contrôleurs de réseau radio CR (appelés RNCs dans le cas d'un UTRAN), raccordés entre eux. Dans le cas d'un réseau LTE, la station de base et le contrôleur de station de base sont deux entités logiques regroupées au sein d'un même noeud du réseau, la station de base eNB.

Chaque station de base Ni est associée à une cellule (logique) associée à un identifiant de cellule, couvrant une partie de la zone de couverture radio du réseau (de communication radio) et dans laquelle des terminaux (de communication non filaires) TC peuvent établir (ou poursuivre) des communications (ou liaisons) ou sessions radio.

Chaque contrôleur de réseau radio CR est associé à au moins une cellule (logique) et est donc couplé à au moins une station de base Ni.

Le coeur de réseau CN comprend de nombreux équipements (ou éléments ou encore entités) de réseau. Parmi ces équipements de réseau, certains sont impliqués dans la fourniture de services de diffusion (ici de type MBMS), comme par exemple :
- un noeud G appelé GGSN (pour « Gateway GPRS Support Node » - assurant la connexion du coeur de réseau CN à un réseau de services (par exemple de type IP) regroupant les services mis à la disposition des utilisateurs des terminaux TC par l'opérateur du réseau, et en particulier les services de diffusion de contenus),
- un noeud S3 appelé 3G-SGSN (pour « 3G-Serving GPRS Support Node »), raccordé notamment au noeud GGSN G et à des contrôleurs de réseau radio CR,
- un serveur de localisation appelé HLR (pour « Home Location Register ») raccordé notamment au noeud 3G-SGSN S3,
- ainsi qu'un éventuel noeud S2 appelé 2G-SGSN, raccordé notamment au noeud GGSN G et au serveur de localisation HLR.

On notera qu'un autre équipement, qui ne fait pas partie du coeur de réseau CN mais qui est connecté à son noeud G (GGSN), est également impliqué dans la fourniture de services de diffusion. Il s'agit d'un contrôleur central CC qui est chargé de mettre en oeuvre le protocole de transport de contenus en mode broadcast ou multicast. Ce contrôleur central CC est par exemple appelé BM-SC (« Broadcast Multicast - Service Center ») dans le cas d'un réseau 3GPP MBMS, ou « MBS server » dans le cas d'un réseau WiMAX, ou encore « Head-end » dans le cas d'un réseau DVB). Dans le cas d'un réseau 3GPP, le contrôleur central CC (de type BM-SC) reçoit les contenus d'un serveur de contenus et les transfère vers les bons contrôleurs de réseau radio (ou noeuds) CR (des RNCs) après avoir interrogé ces derniers et en fonction de messages de type « Ack » ou d'échec (« failure ») qu'il reçoit. Dans le cas d'un réseau DVB il n'y a pas d'échange de message car les données sont envoyées de façon dynamique.

L'invention propose de mettre en oeuvre au sein du réseau (CN, RA) présenté ci-avant un procédé de transmission de contenus en couches. Il est rappelé que l'on entend ici par « contenu en couches » un ensemble de données agencé en une couche dite de base Bi et au moins une couche dite d'augmentation Cij, complémentaire de la couche de base Bi. L'indice i désigne ici un contenu, tandis que l'indice j désigne ici une couche d'augmentation d'un contenu (i). Par exemple un premier contenu (i=1), correspondant à un premier service, peut être constitué d'une couche de base B1, d'une première couche d'augmentation C11 et d'une seconde couche d'augmentation C12, un deuxième contenu (i=2), correspondant à un deuxième service, peut être constitué d'une couche de base B2 et d'une couche d'augmentation C21, et un troisième contenu (i=3), correspondant à un troisième service, peut être constitué d'une couche de base B3, d'une première couche d'augmentation C31 et d'une seconde couche d'augmentation C32.

Il est rappelé qu'un contenu (en couches) doit être transmis dans le cadre d'une session de transmission, éventuellement partagée, à un ensemble d'au moins un utilisateur (voire même à tous les utilisateurs) présent(s) dans une zone de couverture du réseau d'accès radio RA.

Dans l'exemple non limitatif illustré sur la figure 1, les contenus en couches sont fournis par le contrôleur central CC, qui est lui-même alimenté en contenus par un serveur de contenus (non représenté).

Par exemple, le contrôleur central CC reçoit des flux de données en couches qui ont été encapsulées en RTP/UDP/IP par des équipements situés en amont, et il met en oeuvre le protocole de transport de contenus (en mode broadcast ou multicast) pour ces flux afin de transmettre au coeur de réseau CN des flux de contenu(s) encodé(s) conformes au protocole de transport RTP (pour « Real-time Transmission Protocol»), Dans ce qui suit, on considère que le contrôleur central CC délivre des flux résultant de l'encodage de contenus selon des modes d'encodage dits source.

Le procédé selon l'invention comprend trois étapes principales qui sont initiées par le coeur de réseau CN lorsqu'il reçoit des flux de contenu(s) encodé(s) du contrôleur central CC.

Afin de simplifier la description qui suit, on considère à titre d'exemple non limitatif que l'on doit transmettre un unique contenu dans une unique zone géographique couverte par le réseau d'accès radio RA. Mais, l'invention n'est pas limitée à cet exemple. Elle concerne en effet également la transmission de plusieurs contenus, éventuellement de façon multiplexée.

Une première étape principale du procédé selon l'invention consiste à envoyer à des noeuds CR (ici des RNCs) du réseau d'accès radio RA, qui contrôlent des stations de base Ni choisies constituant un premier ensemble E1, une première requête demandant l'établissement d'une session de transmission d'un premier flux qui est relatif à un premier groupe de couche(s) G1, qui comprend par exemple la couche (de données) de base Bi du contenu (i) devant être transmis à des (voire à tous les) terminaux TC situés dans une zone géographique donnée.

On notera que cette transmission peut se faire en mode multicast ou en mode broadcast en fonction des instructions reçues.

Par ailleurs, on comprendra que les stations de base Ni du premier ensemble E1 sont choisies parmi celles qui assurent la couverture radio de la zone géographique dans laquelle doit être diffusé le contenu (i) (ici sous forme encodée).

Lors de cette première étape principale au moins deux cas peuvent être envisagés. Un premier cas consiste à envoyer une première requête demandant l'établissement d'une session de transmission d'un premier flux relatif à un premier groupe G1 qui ne comprend que la couche de base Bi du contenu (i). Un second cas consiste à envoyer une première requête demandant l'établissement d'une session de transmission d'un premier flux relatif à un premier groupe G1 qui comprend toutes les couches Bi et Cij du contenu (i).

Il est important de noter que l'on doit appliquer le premier cas lorsque chaque couche Bi, Cij du contenu (i) est identifiée par une adresse de communication propre, comme par exemple une adresse IP (Internet Protocol). En d'autres thermes, chaque couche Bi ou Cij est associée à sa propre adresse (IP).

Par ailleurs, on doit appliquer le second cas lorsque toutes les couches Bi et Cij du contenu (i) sont identifiées par une même adresse de communication, comme par exemple une adresse IP commune.

Une deuxième étape principale du procédé selon l'invention consiste à déterminer un second ensemble E2 de stations de base parmi les stations de base Ni du premier ensemble E1.

Cette deuxième étape peut être mise en oeuvre d'au moins quatre façons.

Une première façon consiste à déterminer le second ensemble E2 de stations de base Ni après avoir défini le premier ensemble E1 de stations de base Ni, quel que soit le résultat de l'établissement de la session de transmission d'un premier flux par les stations de base Ni du premier ensemble E1. En d'autres termes, on choisit à l'avance parmi les stations de base Ni du premier ensemble E1, celles qui feront partie du second ensemble E2, indépendamment du succès ou de l'échec de l'établissement de sessions par les stations de base Ni du premier ensemble E1. Ce choix peut par exemple être fait par l'opérateur du réseau, de façon arbitraire compte tenu de sa connaissance du réseau d'accès radio RA. Mais, il peut être également fait statiquement en fonction de rapports de mesure(s) qui sont reçus par le coeur de réseau CN et qui sont relatifs aux stations de base Ni du premier ensemble E1.

Une deuxième façon consiste à déterminer le second ensemble E2 de stations de base Ni avec certaines des (éventuellement toutes les) stations de base Ni du premier ensemble E1 qui ont réussi à établir la session de transmission d'un premier flux. On comprendra que dans ce cas, le choix des stations de base Ni du second ensemble E2, se fait dynamiquement une fois que les stations de base Ni du premier ensemble E1 ont signalé au réseau si elles ont réussi ou non à établir la session de transmission d'un premier flux demandée. Ce signalement peut par exemple se faire classiquement au moyen d'un message d'accusé de réception (ou « acknowledge receipt » (ou encore « Ack »)).

On notera que le premier cas précité, consistant à envoyer une première requête demandant l'établissement d'une session de transmission d'un premier flux relatif à un premier groupe G1 qui ne comprend que la couche de base Bi d'un contenu (i), est bien adapté à une deuxième étape principale mise en oeuvre selon la première ou la deuxième façon. En effet, dans ce premier cas il est inutile de choisir pour le second ensemble E2 une station de base Ni qui n'a pas réussi ou qui a refusé l'établissement d'une session pour un premier flux, puisque les terminaux TC rattachés à cette station de base Ni n'auront pas reçu la couche de base Bi du contenu (i) qui est indispensable s'ils veulent utiliser les couches d'augmentation Cij dudit contenu (i).

Une troisième façon consiste à déterminer le second ensemble E2 de stations de base Ni avec certaines des (éventuellement toutes les) stations de base Ni du premier ensemble E1 qui ont refusé d'établir la session de transmission d'un premier flux. On comprendra que dans ce cas, le choix des stations de base Ni du second ensemble E2, se fait dynamiquement une fois que les stations de base Ni du premier ensemble E1 ont signalé au réseau qu'elles ont refusé d'établir la session de transmission d'un premier flux demandée. Ce signalement peut par exemple se faire au moyen d'un message dédié ou bien par la non transmission au réseau d'un accusé de réception,

Une quatrième façon consiste à déterminer le second ensemble E2 de stations de base Ni avec certaines des (éventuellement toutes les) stations de base Ni du premier ensemble E1 qui n'ont pas réussi à établir la session de transmission d'un premier flux. On comprendra que dans ce cas, le choix des stations de base Ni du second ensemble E2, se fait dynamiquement une fois que les stations de base Ni du premier ensemble E1 ont signalé au réseau qu'elles n'ont pas réussi à établir la session de transmission d'un premier flux demandée. Ce signalement peut par exemple se faire au moyen d'un message dédié ou bien par la non transmission au réseau d'un accusé de réception.

On notera qu'une station de base Ni peut refuser d'établir, ou ne pas réussir à établir, une session relative au premier flux d'un premier groupe de couches G1 du fait qu'elle ne dispose pas des capacités suffisantes pour transmettre le premier flux (par exemple elle ne peut pas procéder à la transmission selon le débit requis). Il est important de noter ici qu'une station de base Ni peut être capable de transmettre une partie des couches d'un contenu (i), par exemple sa couche de base Bi et sa première couche d'augmentation Ci1, mais pas la totalité de ses couches Bi et Cij.

On a schématiquement représenté sur la figure 2 un exemple de subdivision d'une zone géographique Z1, dite «zone mère », en deux sous-zones géographiques Z2 et Z3, dites « zones fille ».

La zone mère Z1 est associée au premier ensemble E1 de stations de base Ni. Elle regroupe toutes les stations de base N1 à N10 du premier ensemble E1 qui doivent diffuser un contenu (i), et plus précisément sa couche de base Bi.

Les deux zones fille Z2 et Z3 sont associées au second ensemble E2 de stations de base Ni.

La zone fille Z2 regroupe les stations de base N3 et N6 à N10 qui font partie du premier ensemble E1 et qui doivent diffuser le contenu (i), et plus précisément sa couche de base Bi et au moins l'une de ses couches d'augmentation Cij (par exemple la première Ci1).

La zone fille Z3, est elle-même une zone fille de la zone fille Z2. Elle regroupe les stations de base N3 et N7 à N9 qui font partie du premier ensemble E1 et qui doit diffuser le contenu (i), et plus précisément sa couche de base Bi et au moins deux de ses couches d'augmentation Cij (par exemple la première Ci1 et la seconde Ci2).

Une troisième étape principale du procédé selon l'invention consiste à envoyer aux noeuds CR qui contrôlent les stations de base Ni du second ensemble E2 (ici N3 et N6 à N10) une seconde requête demandant l'établissement d'une session de transmission d'un second flux relatif à un second groupe de couche(s) G2 du contenu (i), distinct du premier groupe G1.

Dans le premier cas précité, consistant à envoyer une première requête demandant l'établissement d'une session de transmission d'un premier flux relatif à un premier groupe G1 qui ne comprend que la couche de base Bi d'un contenu (i), une seconde requête peut demander l'établissement d'une session de transmission d'un second flux relatif à un second groupe G2 comprenant certaines au moins des couches d'augmentation Cij du contenu (i).

On notera que dans ce premier cas on peut envoyer autant de secondes requêtes qu'il y a de couches d'augmentation Cij qui constituent un contenu (i). Chaque seconde requête demande alors l'établissement d'une session de transmission d'un second flux relatif à un second groupe de couche(s) G2 qui ne comprend que l'une au moins des couches d'augmentation Cij du contenu (i).

Lorsque les couches d'augmentation Cij sont associées à des niveaux hiérarchiques différents et ordonnés, on peut envoyer les secondes requêtes les unes après les autres en fonction des niveaux hiérarchiques qui sont associés aux couches d'augmentation Cij auxquelles elles correspondent respectivement. Par exemple, la première couche d'augmentation Ci1 d'un contenu (i) est associée au niveau hiérarchique le plus élevé, tandis que la seconde couche d'augmentation Ci2 de ce contenu (i) est associée au niveau hiérarchique le plus faible. Dans ce cas, la seconde requête qui correspond à la couche d'augmentation associée au niveau hiérarchique le plus élevé est envoyée en premier, puis on envoie la seconde requête suivante qui correspond à la couche d'augmentation associée au niveau hiérarchique qui est inférieur au niveau le plus élevé, et ainsi de suite.

Par exemple, si l'on se réfère à l'exemple de subdivision en zone mère (Z1) et zones fille (Z2 et Z3) présenté ci-avant, et en présence d'un contenu (i) à diffuser comprenant une couche de base Bi et deux couches d'augmentation Ci1 et Ci2, après avoir envoyé aux noeuds CR qui contrôlent les stations de base N1 à N10 de la zone mère Z1, une première requête leur demandant l'établissement d'une session de transmission d'un premier flux relatif à un premier groupe G1 comprenant la couche de base Bi du contenu (i), on peut envoyer aux noeuds CR qui contrôlent les stations de base Ni à N10 de la zone mère Z1, une seconde requête leur demandant l'établissement d'une session de transmission d'un second flux relatif à un second groupe G2 comprenant la première couche d'augmentation Ci1 du contenu (i). Puis, si le réseau est averti du fait que seules les stations de base N3 et N7 à N9 de la zone fille Z3 ont réussi à établir le second flux, alors on envoie aux noeuds CR qui contrôlent ces mêmes stations de base (N3 et N7 à N9) de la zone fille Z3, une nouvelle seconde requête leur demandant l'établissement d'une session de transmission d'un second flux relatif à un second groupe G2 ne comprenant que la seconde couche d'augmentation Ci2 du contenu (i).

On comprendra que dans l'exemple présenté ci-avant, on peut diffuser toutes les couches Bi, Ci1 et Ci2 du contenu (i) dans la zone fille Z3. Dans une partie de la zone fille Z2, excluant la zone fille Z3, on ne peut diffuser que la couche de base Bi et la première couche d'augmentation Ci1, et dans une partie de la zone mère Z1, excluant la zone fille Z2, on ne peut diffuser que la couche de base Bi.

On notera que dans le premier cas précité, le contexte de support MBMS (ou « MBMS bearer context ») demeure inchangé par la décomposition en premier E1 et second E2 ensembles. En d'autres termes, on continue à associer un identifiant de zone de service de support MBMS (ou « MBMS bearer service area »), correspondant à une zone mère ou une zone fille, à chaque contexte de support MBMS.

Les identifants des zones de service de support MBMS, correspondant aux zone mère et zone(s) fille, sont stockés et mis à jour dans le noeud SGSN S3 et doivent être transférés vers les entités de réseau concernées (noeud GGSN G, contrôleur central CC (ici de type BM-SC) et réseau d'accès radio RA (ici l'UTRAN)) lorsqu'un contexte de support MBMS est généré au commencement d'une session ou lorsqu'une mise à jour de session a été déclenchée.

Dans le second cas précité, consistant à envoyer une première requête demandant l'établissement d'une session de transmission d'un premier flux relatif à un premier groupe G1 comprenant toutes les couches Bi et Cij d'un contenu (i), une seconde requête peut demander l'établissement d'une session de transmission d'un second flux relatif à un second groupe G2 comprenant un sous-groupe du premier groupe de couches G1.

Ce second cas est bien adapté à une deuxième étape principale mise en oeuvre selon la troisième ou la quatrième façon, c'est-à-dire aboutissant à un second ensemble E2 comprenant des stations de base Ni qui ont refusé ou n'ont pas réussi à établir la session relative au premier flux du premier groupe de couches G1. En effet, dans ce second cas une station de base du second ensemble E2 ne pourra (éventuellement) transmettre qu'un second flux relatif à un nombre de couches du contenu (i) inférieur au nombre total de couches Bi et Cij constituant ce contenu (i). On notera cependant que dans ce cas, la seconde requête doit être relative à un second flux correspondant au moins à la couche de base Bi d'un contenu (i), puisqu'il ne servirait à rien d'établir une session de transmission pour transmettre l'une au moins des couches d'augmentation d'un contenu (i) en l'absence de la couche de base Bi complémentaire.

On notera que dans ce second cas on peut également envoyer autant de secondes requêtes qu'il y a de couches d'augmentation qui constituent un contenu (i). Comme dans le premier cas, les secondes requêtes peuvent être transmises successivement de façon hiérarchisée en commerçant par celle qui correspond à la couche d'augmentation qui est associée au niveau hiérarchique qui est inférieur au niveau le plus élevé. La couche d'augmentation qui est associée au niveau hiérarchique le plus élevé n'est en effet pas prise en compte ici puisqu'il est associé à une couche d'augmentation objet de la première requête.

Par exemple, si l'on se réfère de nouveau à l'exemple de subdivision en zone mère (Z1) et zones fille (Z2 et Z3) présenté ci-avant, et en présence d'un contenu (i) à diffuser comprenant une couche de base Bi et deux couches d'augmentation Ci1 et Ci2, après avoir envoyé aux noeuds CR qui contrôlent les stations de base N1 à N10 de la zone mère Z1, une première requête leur demandant l'établissement d'une session de transmission d'un premier flux relatif à un premier groupe G1 comprenant toutes les couches Bi, Ci1 et Ci2 du contenu (i), si le réseau est averti que les stations de base N3 et N6 à N10 de la zone fille Z2 n'ont pas réussi à établir (ou refusent d'établir) le premier flux, alors on commence par envoyer aux noeuds CR qui contrôlent les stations de base N3 et N6 à N10 de la zone fille Z2, une nouvelle seconde requête leur demandant l'établissement d'une session de transmission d'un second flux relatif à un second groupe G2 comprenant la couche de base Bi et la première couche d'augmentation Ci1 du contenu (i). Puis, si le réseau est averti que les stations de base N3 et N7 à N9 de la zone fille Z3 n'ont pas réussi à établir (ou refusent d'établir) le second flux, on envoie aux noeuds CR qui contrôlent les stations de base N3 et N7 à N9 de la zone fille Z4, une seconde requête leur demandant l'établissement d'une session de transmission d'un second flux relatif à un second groupe G2 ne comprenant que la couche de base Bi du contenu (i).

On comprendra que dans l'exemple présenté ci-avant, on ne peut diffuser que la couche de base Bi du contenu (i) dans la zone fille Z3. Dans une partie de la zone fille Z2, excluant la zone fille Z3, on ne peut diffuser que la couche de base Bi et la première couche d'augmentation Ci1, et dans une partie de la zone mère Z1, excluant la zone fille Z2, on peut diffuser toutes les couches Bi, Ci1 et Ci2.

On notera que dans le second cas précité, le contexte de support MBMS (ou « MBMS bearer context ») doit être changé par la décomposition en premier E1 et second E2 ensembles. En fait, un contexte de support MBMS doit être associé à toutes les zones de service de support MBMS qui correspondent à la zone mère et au(x) zone(s) fille.

Les identifiants des zones de service de support MBMS, correspondant aux zone mère et zone(s) fille, sont stockés et mis à jour dans le noeud SGSN S3 et doivent être transférés vers les entités de réseau concernées (noeud GGSN G, contrôleur central CC (ici de type BM-SC) et réseau d'accès radio RA (ici l'UTRAN)) lorsqu'un contexte de support MBMS est généré au commencement d'une session ou lorsqu'une mise à jour de session a été déclenchée.

L'invention est particulièrement avantageuse car elle permet aux opérateurs de réseau d'optimiser le déploiement des protocoles de diffusion (broadcast/multicast). En outre, elle offre une certaine flexibilité aux mécanismes d'adaptation de débit dans les différents modes de diffusion (broadcast/multicast). Par ailleurs, elle est compatible avec toutes les fonctionnalités et tous les standards qui sont mis en oeuvre dans les infrastructures de transmission par voie d'ondes existantes.

L'invention ne se limite pas aux modes de réalisation de procédé de transmission de contenus en couches décrits ci-avant, seulement à titre d'exemple, mais elle englobe toutes les variantes que pourra envisager l'homme de l'art dans le cadre des revendications ci-après.

## Revendications

1. Procédé de transmission, via une infrastructure (CN, RA) de transmission par voie d'ondes, comportant un coeur de réseau (CN) couplé à un réseau d'accès radio (RA) comprenant des stations de base (Ni) contrôlées par des noeuds (CR), d'un contenu agencé en une couche de données de base et au moins une couche de données d'augmentation, ledit procédé comprenant les étapes suivantes initiées par le coeur de réseau (CN) lorsqu'il reçoit des flux de contenu(s) encodé(s) du contrôleur central (CC) :
- envoyer à des noeuds (CR), contrôlant des stations de base (Ni) choisies constituant un premier ensemble, une première requête demandant l'établissement d'une session de transmission d'un premier flux relatif à un premier groupe de couche(s) dudit contenu comprenant au moins la couche de données de base (Bi),
- déterminer un second ensemble de stations de base parmi les stations de base (Ni) dudit premier ensemble après avoir défini ledit premier ensemble, et
- envoyer aux noeuds (CR), contrôlant lesdites stations de base (Ni) dudit second ensemble, une seconde requête demandant l'établissement d'une session de transmission d'un second flux relatif à un second groupe de couche(s) dudit contenu, distinct dudit premier groupe et ne comprenant que des couches de données d'augmentation (Cij).

2. Procédé selon la revendication 1, dans lequel le premier groupe de couche(s) dudit contenu comprend au moins ladite couche de données de base.

3. Procédé selon la revendication 1 ou 2, dans lequel on détermine ledit second ensemble de stations de base (Ni) après avoir défini ledit premier ensemble de stations de base (Ni) mais indépendamment du succès ou de l'échec de l'établissement de la session de transmission d'un premier flux par les stations de base (Ni) dudit premier ensemble.

4. Procédé selon la revendication 3, dans lequel on détermine ledit second ensemble de stations de base (Ni) en fonction de rapports de mesure(s) relatifs aux stations de base (Ni) dudit premier ensemble.

5. Procédé selon la revendication 1 ou 2, dans lequel on détermine ledit second ensemble de stations de base (Ni) avec certaines des stations de base (Ni) du premier ensemble qui ont réussi à établir la session de transmission d'un premier flux.

6. Procédé selon l'une des revendications 1 à 5, dans lequel on envoie une première requête demandant l'établissement d'une session de transmission d'un premier flux relatif à un premier groupe de couche dudit contenu ne comprenant que ladite couche de base, et on envoie une seconde requête demandant l'établissement d'une session de transmission d'un second flux relatif à un second groupe de couche(s) ne comprenant qu'au moins une couche de données d'augmentation dudit contenu mais pas ladite couche de données de base dudit contenu.

7. Procédé selon la revendication 6, dans lequel on envoie autant de secondes requêtes qu'il y a de couches de données d'augmentation constituant ledit contenu, chaque seconde requête demandant alors l'établissement d'une session de transmission d'un second flux relatif à un second groupe de couche(s) ne comprenant que l'une desdites couches de données d'augmentation dudit contenu.

8. Procédé selon la revendication 7, dans lequel, en présence de couches de données d'augmentation associées à des niveaux hiérarchiques différents et ordonnés, on envoie lesdites secondes requêtes les unes après les autres en fonction des niveaux hiérarchiques associés aux couches de données d'augmentation auxquelles elles correspondent respectivement, celle correspondant à la couche de données d'augmentation associée au niveau hiérarchique le plus élevé étant envoyée en premier.

9. Procédé selon l'une des revendications 6 à 8, dans lequel on identifie chaque couche dudit contenu avec une adresse de communication propre.

10. Procédé selon la revendication 1, dans lequel on détermine ledit second ensemble de stations de base (Ni) avec certaines des stations de base (Ni) du premier ensemble qui ont refusé d'établir la session de transmission d'un premier flux.

11. Procédé selon la revendication 1, dans lequel on détermine ledit second ensemble de stations de base (Ni) avec certaines des stations de base (Ni) du premier ensemble qui n'ont pas réussi à établir la session de transmission d'un premier flux.

12. Procédé selon l'une des revendications 1, 10 et 11, dans lequel on envoie une première requête demandant l'établissement d'une session de transmission d'un premier flux relatif à un premier groupe de couches comprenant toutes les couches dudit contenu, et on envoie une seconde requête demandant l'établissement d'une session de transmission d'un second flux relatif à un second groupe de couche(s) constituant un sous-groupe dudit premier groupe de couches.

13. Procédé selon la revendication 12, dans lequel on utilise une même adresse de communication pour identifier toutes les couches dudit contenu.

## Patentansprüche

1. Übertragungsverfahren über eine Infrastruktur (CN, RA) zur Übertragung durch Wellen, die ein Kernnetz (CN) aufweist, das an ein Funk-Zugangsnetzwerk (RA) gekoppelt ist, welches durch Knoten (CR) kontrollierte Basisstationen (Ni) aufweist, die einen in einer Basisdatenschicht angeordneten Inhalt haben und mindestens eine Erweiterungsdatenschicht, wobei dieses Verfahren folgende Schritte aufweist, die vom Kernnetz (CN) initiiert werden, wenn dieses (einen) codierte(n) Inhaltsfluss/-flüsse von der zentralen Steuereinheit (CC) erhält:
- Versand von Knoten (CR), die ausgewählte Basisstationen (Ni) prüfen, welche eine erste Menge bilden, wobei eine erste Anforderung den Aufbau einer Übertragungssitzung eines ersten Flusses in Bezug auf eine erste Schichtengruppe des Inhalts verlangt, die mindestens die Basisdatenschicht (Bi) aufweist,
- Ermittlung einer zweiten Menge von Basisstationen aus den Basisstationen (Ni) der ersten Menge nach Ermittlung der ersten Menge und
- Versand an die Knoten (CR), die die Basisstationen (Ni) der zweiten Menge kontrollieren, wobei eine zweite Anforderung den Aufbau einer Übertragungssitzung eines zweiten Flusses in Bezug auf eine zweite Schichtengruppe des Inhalts verlangt, die sich von der ersten Gruppe unterscheidet und nur Erweiterungsdatenschichten (Cij) enthält.

2. Verfahren nach Anspruch 1, in dem die erste Schichtengruppe des Inhalts mindestens die Basisdatenschicht aufweist.

3. Verfahren nach Anspruch 1 oder 2, in dem die zweite Menge von Basisstationen (Ni) ermittelt wird, nachdem die erste Menge von Basisstationen (Ni) festgelegt wurde, aber unabhängig vom Erfolg oder Misserfolg des Aufbaus der Übertragungssitzung eines ersten Flusses durch die Basisstationen (Ni) der ersten Menge.

4. Verfahren nach Anspruch 3, in dem die zweite Menge von Basisstationen (Ni) nach den Messberichten in Bezug auf die Basisstationen (Ni) der ersten Menge ermittelt wird.

5. Verfahren nach Anspruch 1 oder 2, in dem die zweite Menge von Basisstationen (Ni) mit bestimmten Basisstationen (Ni) der ersten Menge ermittelt wird, die die Übertragungssitzung eines ersten Flusses erfolgreich aufgebaut haben.

6. Verfahren nach einem der Ansprüche 1 bis 5, in dem eine erste Anforderung, welche den Aufbau einer Übertragungssitzung eines ersten Flusses in Bezug auf eine erste Schichtengruppe des Inhalts, die nur die Basisschicht enthält, verlangt, und eine zweite Anforderung versandt wird, die den Aufbau einer Übertragungssitzung eines zweiten Flusses in Bezug auf eine zweite Schichtengruppe verlangt, welche nur mindestens eine Erweiterungsdatenschicht des Inhalts, aber nicht die Basisdatenschicht des Inhalts enthält.

7. Verfahren nach Anspruch 6, in dem so viele zweite Anforderungen wie Erweiterungsdatenschichten, die den Inhalt bilden, versendet werden, wobei jede zweite Anforderung dann den Aufbau einer Übertragungssitzung eines zweiten Flusses in Bezug auf eine zweite Schichtengruppe verlangt, die nur eine dieser Erweiterungsdatenschichten dieses Inhalts aufweist.

8. Verfahren nach Anspruch 7, in dem in Anwesenheit von Erweiterungsdatenschichten verbunden mit verschiedenen und angeordneten hierarchischen Ebenen die zweiten Anforderungen nacheinander je nach hierarchischen Ebenen versendet werden, wobei die hierarchischen Ebenen mit den Erweiterungsdatenschichten verbunden sind, denen sie jeweils entsprechen, wobei diese Schicht der Erweiterungsdatenschicht entspricht, die mit der höchsten hierarchischen Ebene verbunden ist, die als erste versendet wurde.

9. Verfahren nach einem der Ansprüche 6 bis 8, in dem jede Schicht des Inhalts mit einer eigenen Kommunikationsadresse gekennzeichnet wird.

10. Verfahren nach Anspruch 1, in dem die zweite Menge von Basisstationen (Ni) mit bestimmten Basisstationen (Ni) der ersten Menge ermittelt wird, welche den Aufbau einer Übertragungssitzung eines ersten Flusses verweigert haben.

11. Verfahren nach Anspruch 1, in dem eine zweite Menge von Basisstationen (Ni) mit bestimmten Basisstationen (Ni) der ersten Menge ermittelt wird, die den Aufbau der Übertragungssitzung eines ersten Flusses nicht erfolgreich durchgeführt haben.

12. Verfahren nach einem der Ansprüche 1, 10 und 11, in dem eine ersten Anforderung gesendet wird, die den Aufbau einer Übertragungssitzung eines ersten Flusses in Bezug auf eine erste Schichtengruppe verlangt, die alle Schichten des Inhalts enthält, und eine zweite Anforderung gesendet wird, die den Aufbau einer Übertragungssitzung eines zweiten Flusses in Bezug auf eine zweite Schichtengruppe verlangt, welche eine Untergruppe der ersten Schichtengruppe bildet.

13. Verfahren nach Anspruch 12, in dem dieselbe Kommunikationsadresse für die Kennzeichnung aller Schichten des Inhalts verwendet wird.

## Claims

1. A method for transmitting, via a wave-based transmission infrastructure (CN, RA), comprising a core network (CN) coupled to a radio access network (RA) comprising base stations (Ni) controlled by nodes (CR), content arranged in a base data layer and at least one augmentation data layer, said method comprising the following steps initiated by the core network (CN), when it receives one or more encoded content flows from the central controller (CC):
- sending to nodes (CR) that control chosen base stations (Ni) forming a first set, a first request to establish a transmission session for a first flow related to a first group of one or more layers of said content comprising at least the base data layer (Bi),
- determining a second set of base stations from among the base stations (Ni) of said first set after having defined said first set, and sending to the notes (CR) that control said base stations (Ni) of said second set, a second request to establish a transmission session for a second flow related to a second group of one or more layers of said content, distinct from said first group and comprising only augmentation data layers (Cij).

2. A method according to claim 1, wherein the first group of one or more layers of said content comprises at least said base data layer.

3. A method according to claim 1 or 2, wherein said second set of base stations (Ni) is determined after having defined said first set of base stations (Ni) but independently of the success or failure at establishing the transmission session for the first flow by the base stations (Ni) of said first set.

4. A method according to claim 3, wherein said second set of base stations (Ni) is determined based on one or more measurement reports related to the base stations (Ni) of said first set.

5. A method according to claim 1 or 2, wherein said second set of base stations (Ni) is determined with some of the base stations (Ni) of the first set that successfully established the transmission session for the first flow.

6. A method according to any one of the claims 1 to 5, wherein a first request is sent to establish a transmission session for a first flow related to a first layer group of said content comprising only said base layer, and a second request is sent to establish a transmission session for a second flow related to a second layer group comprising only at least one augmentation data layer of said content but not said base data layer of said content.

7. A method according to claim 6, wherein as many second requests are sent as there are augmentation data layers forming said content, each second request at that point to establish a transmission session for a second flow related to a second layer group comprising only one of said augmentation data layers of said content.

8. A method according to claim 7, wherein, in the presence of augmentation data layers associated with ordered, different hierarchical levels, said second requests are sent one after another based on the hierarchical levels associated with the augmentation data layers to which they respectively correspond, with the one corresponding to the augmentation data layer associated with the highest hierarchical level being sent first.

9. A method according to one of the claims 6 to 8, wherein each layer of said content is identified with its own communication address.

10. A method according to claim 1, wherein said second set of base stations (Ni) is determined with some of the base stations (Ni) of the first set that refused to establish the transmission session of a first flow.

11. A method according to claim 1, wherein said second set of base stations (Ni) is determined with some of the base stations (Ni) of the first set that did not succeed at establishing the transmission session of a first flow.

12. A method according to any one of the claims 1, 10, and 11, wherein a first request is sent to establish a transmission session for a first flow related to a first layer group comprising all layers of said content, and a second request is sent to establish a transmission session for a second flow related to a second layer group forming a subgroup of said first layer group.

13. A method according to claim 12, wherein the same communication address is used to identify all layers of said content.
